Europäisches Patentamt

(19) **European Patent Office**

Office européen des brevets

(11) Publication number: **0 056 200**
**B1**

(12) **EUROPEAN PATENT SPECIFICATION**

(45) Date of publication of patent specification: **23.09.87**

(51) Int. Cl.⁴: **D 21 H 5/18, C 01 F 11/46**

(21) Application number: **81306189.2**

(22) Date of filing: **31.12.81**

(54) **Process for preparing and using a crystalline product.**

(30) Priority: **02.01.81 ES 498296**
**11.02.81 ES 499334**

(43) Date of publication of application:
**21.07.82 Bulletin 82/29**

(45) Publication of the grant of the patent:
**23.09.87 Bulletin 87/39**

(84) Designated Contracting States:
**AT BE CH DE FR GB IT LI LU NL SE**

(56) References cited:
**US-A-2 304 361**

**H. HENTSCHEL: "Chemische Technologie der Zellstoff- und Papierherstellung", 3. Edition, 1967, VEB Fachbuch Verlag LEIPZIG (DE), pages 490-497**

**L. PAULING: "Chemie-Eine Einführung", 4th edition, 1962, Verlag Chemie WEINHEIM (DE), page 115**

(73) Proprietor: **Galcerán-Vila, Enriqueta**
**2, Pasaje Barcelona**
**Sant Joan Les Fonts Girona (ES)**

(72) Inventor: **Galcerán-Vila, Enriqueta**
**2, Pasaje Barcelona**
**Sant Joan Les Fonts Girona (ES)**

(74) Representative: **Davies, Arthur Raymond et al**
**27, Imperial Square**
**Cheltenham, GL50 1RQ (GB)**

Courier Press, Leamington Spa, England.

## Description

The invention relates to a method for preparing and using a crystalline product having special properties, of particular use in the paper industry, which allows a saving of from 5% to 25% of cellulose and from 3% to 18% in energy consumption depending on the quantity of the product used.

The preparation and use of this product comprises the addition of $CaSO_4\frac{1}{2}H_2O$ (commonly called gypsum or scagliola and designated chemically sulphate of calcium semihydrate) to an aqueous dispersion of cellulose fibres for use in the manufacture of paper. When the $CoSO_4\frac{1}{2}H_2O$ is added to water in a state of agitation, elongate crystals of $CaSO_4 \cdot 2H_2O$ (calcium sulphate dihydrate) are formed and act as a filler.

United States Patent Specification No. 2,304,361 describes the addition to wet paper pulp, before web formation, of a slurry of a quick setting gypsum cement containing a small amount of aluminium sulphate. According to the disclosure in the U.S. Specification, the addition of the aluminium sulphate is regarded as being essential. In the described method the nature of the gypsum cement, the type of agitation (i.e. its speed and duration), and the proportion of $CaSO_4\frac{1}{2}H_2O$ to water are such that the crystals of $CaSO_4 \cdot 2H_2O$ comprise long needle-like masses which interlock and mat, causing the material to bulk up very greatly and to produce a semi-solid jelly-like mass which will set up to a considerable depth upon a Fourdrinier screen.

According to the present invention it has been discovered that the use of aluminium sulphate in such a method is not, in fact, essential and that advantages may be obtained by omitting the aluminium sulphate. Furthermore, the present invention provides that the speed and duration of agitation, and the proportion of $CaSO_4\frac{1}{2}H_2O$ should be so controlled as to result in a lattice of individual crystals of $CaSO_4 \cdot 2H_2O$, rather than an interlocking mat of crystals forming a semi-solid jelly-like mass as in the known method.

When these lattice-like crystals are added in aqueous dispersion to an aqueous suspension of cellulose fibres they unite with them in a polar manner and by Van der Waal's forces in such a way that results are obtained which are much superior to those afforded by conventional charges (kaolin, calcium carbonate, talc, ground natural calcium sulphate . . .), so that not only the charges but to a large extent also the cellulose are replaced. Or to summarise: it permits of a large saving in that it replaces from 5% to 25% of cellulose (being itself a product five times cheaper) and at the same time reduces the consumption of energy by from 3% to 18—20%.

According to the method described in U.S. Specification No. 2,304,361, however, the filler in the form of a semi-solid jelly-like mass will provide only poor quality paper and, due to its bulk, also limits the percentage of filler which can be added to the cellulose fibres. The more open lattice of the applicant's novel method results in higher quality paper, yet combined with the possibility of adding higher proportions of filler to the cellulose fibres, thus substantially reducing cost. Furthermore, the mass of filler material formed by the known method can lead to blockage of the pipes, valves, etc. through which the product must pass before the paper pulp is formed into a web, and can also lead to blockages of the interstices of the paper-forming wire. There is much less risk of this with the more open lattice of the applicant method.

Also, the jelly-like mass of the known method is made up of small particles of moisture trapped in small spaces between the crystals and cellulose fibres, with the result that drainage and drying of the paper web is difficult requiring a higher expenditure of energy. In the applicant's method, since a lattice is formed it is much easier, and thus less costly, to extract the moisture from between the crystals and fibres in the draining and drying processes.

The following is a detailed description of embodiments of the invention, reference being made to the accompanying drawings in which:

Figure 1 shows diagrammatically the crystalline form of the product used in the method according to the invention,

Figure 2 shows diagrammatically a crystal lattice formed by the product,

Figure 3 shows diagrammatically the product combined with a cellulose suspension, and

Figure 4 is a diagrammatic representation of a process including the method according to the invention.

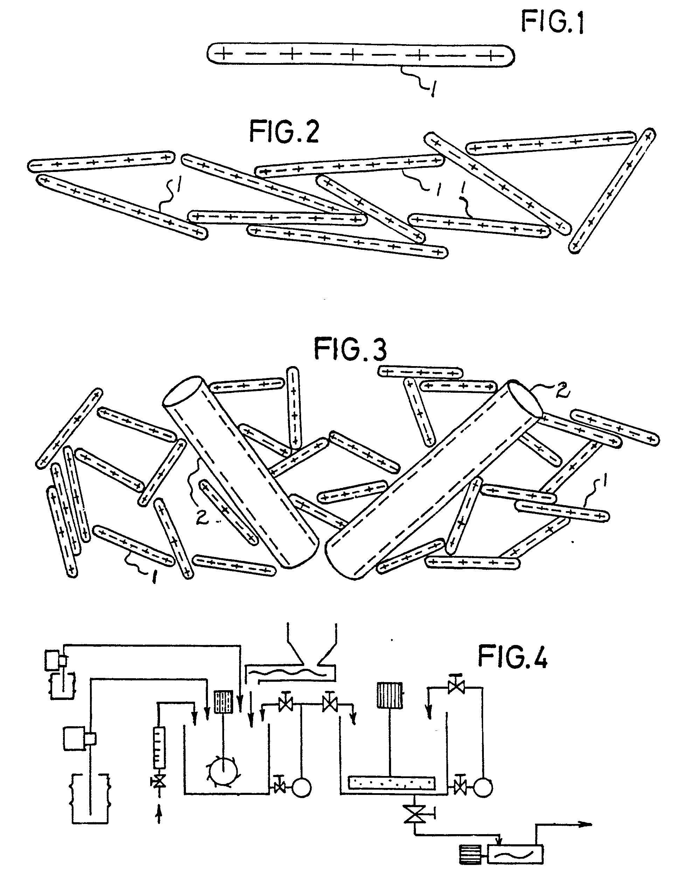

The advantages afforded by this product (calcium sulphate dihydrate crystallised), are owed to the crystalline form 1 which it acquires and to the distribution of charges on its surface, density zones of positive and negative electrical charge, approximately as indicated in Figure 1 of the drawings attached by way of example.

This causes it to tend to join with the other crystals 1 forming a lattice like that in Figure 2, so that hardly any crystal 1 remains alone. Having these positive charges, since cellulose throughout its normal field or work has a negative electrokinetic potential, the more so the higher the pH, it tends to unite with the cellulose fibres 2 in the form illustrated in Figure 3.

This causes the combination of both products (cellulose fibre 2 and crystals 1 of calcium sulphate dihydrate) to acquire an unusual consistency, as a result of which better conditions of resistance are obtained, which permits of increasing the % of charge, a much better yield of both on the manufacturing table and a greater facility in dewatering in the cross-section of dried material, which results in a considerable saving in energy.

The action described above for certain uses in which the presence of aluminium ions (bonded with diketenes) is not of interest, or cheap papers, may take place without the action and presence of aluminium salts, revealing then distinct, although also very interesting, properties.

Calcium sulphate semi-hydrate is more soluble than calcium sulphate dihdyrate; this is why when calcium sulphate semi-hydrate is placed in an aqueous medium it is transformed into calcium sulphate dihydrate. When $CaSO_4\frac{1}{2}H_2O$ is added as well as water in a deposit being agitated, as it dissolves in the water and succeeds in reaching the product of solubility of the $CaSO_42H_2O$, the latter is precipitated in a crystalline form; this reaction continues until all the $CaSO_4\frac{1}{2}H_2O$ has changed to $CaSO_42H_2O$

$$[SO_4^=] \cdot [Ca^{++}] = K_{so_4ca} = 6.4 \cdot 10^{-5}$$

and the precipitation reaction which takes place is the following:

$CaSO_4\frac{1}{2}H_2O$ in aqueous medium$\rightarrow SO_4^=Ca^{++}$ and then, as it reaches the product of solubility it precipitates$\rightarrow CaSO_42H_2O$ crystalline in very uniform needles.

If this reaction takes place in the innermost part of a dispersion (suspension of cellulose fibres), the formation of crystals occurs on the fibres themselves, the former being very well attached to the latter so that later, when the suspension reaches the manufacturing table or drums, these crystals have a retention much superior to that of the other charges (almost double) and also improve the retention of fine cellulose matter; and when the paper is finished, this fixation of the crystals on the cellulose fibres prevents there being any loosening of fine powder (a very annoying and damaging matter) which conventional charges usually cause: kaolin, talc, calcium carbonate, ground calcium sulphate, etc.

The method of adding and preparing the product is continuously, both in its preparation and its addition. The method comprises continuously adding water and calcium sulphate semi-hydrate to a deposit being agitated, and this proceeding continuously to a homogenising deposit (slow speed), thence forward the product may be proportioned either in the pulper, the mixing vat or the machine headbox, although it may be added in any other place. This gives the advantage of not having to keep large stocks of prepared product and, in addition, of effecting a rapid change of addition according to requirements.

For the preparation of this product both directly as a solid on the fibrous suspension and previously in water in a state of agitation for later addition, as described above, tensio-active products may be added: dispersants, emulsifiers, accelerators, retarders, for instance citric acid, sodic acid, sulphuric acid, calcium hydroxide, sodium hydroxide, sodium citrate, etc. With these products in very small additions of 1 to 100 parts per 10,000 of dry product calculated on dry sulphate semi-hydrate added, the speed of solubility and subsequent crystal formation may be varied. By means of the control over the size of the crystals is also possible, although when it is of interest that this size should be the smallest possible this is achieved better with carboxy-methyl celluloses or similar products. To obtain the results which are going to be explained, the addition of the said products is not essential, but the addition may be made exclusively with calcium sulphate semi-hydrate.

The addition of calcium sulphate semi-hydrate without the presence of aluminium sulphate is of· interest since in some cases the presence of an aluminium ion could be prejudicial (for example, bonded with diketenes), also resulting in a somewhat cheaper product. Yield is greater when the reaction is effected in the presence of aluminium ion salts. Thus the reaction taking place in the presence of aluminium ion salts, the qualities afforded (yield, energy saving, substitution of cellulose, etc) are superior to those afforded by crystalline calcium sulphate dihydrate without aluminium sulphate and considerably more than normal charges (kaolin, talc, calcium carbonate, ground calcium sulphate etc). But the calcium sulphate dihydrate resulting from hydration of the semi-hydrate is superior to all the normal charges and has the advantage that it can be used when it bonds with diketenes, whilst on the other hand crystalline calcium sulphate dihydrate with an aluminium salt does not.

The object of this invention, presents in regard to paper manufacture: substitution of more than 10% of cellulose and reduction in energy consumption by more than 10%, as well as better recovery of solids, which means that contamination is practically half the normal.

## Claims

1. A method for preparing and using a crystalline product in the manufacture of paper comprising adding to an aqueous dispersion of cellulose fibres, before paper web formation, a filler product comprising $CaSO_4\frac{1}{2}H_2O$ agitated in water or in the aqueous dispersion to form crystals of $CaSO_4 \cdot 2H_2O$ characterised in that the method is carried out continuously and the filler product is free of aluminium sulphate, and in that the speed and duration of agitation, and the proportion of $CaSO_4\frac{1}{2}H_2O$, are such as to form a lattice of individual crystals of $CaSO_4 \cdot 2H_2O$.

2. A method according to claim 1 characterised by the addition separately and continuously of water and $CaSO_4\frac{1}{2}H_2O$ as a solid to a dilutor-reactor, from where it is transferred (with the possibility of varying the flow) to a second homogenising deposit from which (also with the possibility of varying the flow) it passes to a vibrating filter (with the possibility of having a return to the second product deposit without filtering), the filtered product passing to a third stock deposit from which it is measured out directly at one, two or more points at a time of the paper manufacture.

3. A method according to claim 1 or claim 2 characterised by the addition $CaSO_4\frac{1}{2}H_2O$ on top of water in agitation, to which are added tensio-active products, emulsifiers, dispersants, accelerators or retarders to control the speed and size of the crystals of $CaSO_4 \cdot 2H_2O$ formed, then adding the dispersion of this product $CaSO_4 \cdot 2H_2O$ thus prepared, during paper manufacture, at any point before the intake tank.

**Patentansprüche**

1. Verfahren zum Herstellen und Verwenden eines kristallinen Produkts bei der Herstellung von Papier, wobei einer wässerigen Dispersion von Cellulosefasern vor der Papierbahnherstellung ein Füllstoff zugesetzt wird, der aus $CaSO_4\frac{1}{2}H_2O$, umgerührt in Wasser oder in der wässerigen Dispersion, besteht, um Kristalle von $CaSO_4 \cdot 2H_2O$ zu bilden, dadurch gekennzeichnet, daß das Verfahren kontinuierlich ausgeführt wird und daß der Füllstoff frei von Aluminiumsulfat ist und daß die Geschwindigkeit und die Dauer des Umrührens sowie der Anteil von $CaSO_4\frac{1}{2}H_2O$ so sind, daß ein Gitter von einzelnen Kristallen von $CaSO_4 \cdot 2H_2O$ gebildet wird.

2. Verfahren nach Anspruch 1, gekennzeichnet durch das gesonderte und kontinuierliche Zusetzen von Wasser und $CaSO_4\frac{1}{2}H_2O$ als Feststoff in einem Dilutor-Reaktor, aus dem diese (mit der Möglichkeit des Veränderns des Durchflusses) zu einem zweiten Homogenisierlager übertragen werden, aus dem sie (ebenfalls mit der Möglichkeit des Veränderns des Durchflusses) zu einem schwingenden Filter gelangen (mit der Möglichkeit der Rückkehr zu dem zweiten Produktlager ohne Filterung), wobei das gefilterte Produkt zu einem dritten Stofflager geht, aus dem es an einer, zwei oder mehr als zwei Stellen der Papierherstellung gleichzeitig direkt zugemessen wird.

3. Verfahren nach Anspruch 1 oder 2, gekennzeichnet, durch das Zusetzen von $CaSO_4\frac{1}{2}H_2O$ oben auf dem Wasser, das umgerührt wird, welchem tensioaktive Produkte, Emulgierer, Dispergiermittel, Beschleuniger oder Verzögerer zugesetzt werden, um die Geschwindigkeit und die Größe der gebildeten Kristalle von $CaSO_4 \cdot 2H_2O$ zu steuern, wobei dann der Dispersion dieses Produkts $CaSO_4 \cdot 2H_2O$, das so hergestellt worden ist, während der Papierherstellung an irgendeiner Stelle vor dem Einlaßtank zugesetzt wird.

**Revendications**

1. Procédé de préparation et d'utilisation d'un produit cristallin dans la fabrication de papier, consistant à ajouter à une dispersion aqueuse de fibres de cellulose, avant la formation de la bande continue de papier, un produit de charge comprenant $CaSO_4\frac{1}{2}H_2O$ agité dans l'eau ou dans la dispersion aqueuse de manière à former des cristaux de $CaSO_4 \cdot 2H_2O$, caractérisé en ce que le procédé est exécuté en continu et le produit de charge est exempt de sulfate d'aluminium, et en ce que la vitesse et la duréee d'agitation et la proportion de $CaSO_4\frac{1}{2}H_2O$ sont telles qu'il soit formé un réseau de cristaux individuels de $CaSO_4 \cdot 2H_2O$.

2. Procédé selon la revendication 1, caractérisé par l'addition, séparément et en continu, d'eau et de $CaSO_4\frac{1}{2}H_2O$ sous forme de matière solide à un appareil de dilution-réacteur, à partir duquel le produit est transféré (avec la possibilité de faire varier le débit) dans un deuxième réservoir d'homogénéisation, depuis lequel il passe (avec également la possibilité de faire varier le débit) dans un filtre vibrant (avec la possibilité de retour dans le deuxième réservoir de produit sans filtration), la produit filtré passant dans un troisième réservoir de pâte de papier, à partir duquel il est dosé directement en un, deux ou plusieurs points au moment de la fabrication de papier.

3. Procédé selon la revendication 1 ou 2, caractérisé par l'addition de $CaSO_4\frac{1}{2}H_2O$ sur le haut d'eau en agitation, à laquelle sont ajoutés des produits tensio-actifs, des émulsifiants, des dispersants, des accélérateurs ou des retardateurs, afin de contrôler la vitesse de formation et la grosseur des cristaux de $CaSO_4 \cdot 2H_2O$ formés, la dispersion de ce produit de $CaSO_4 \cdot 2H_2O$ ainsi préparée étant ensuite ajoutée, au cours de la fabrication de papier, en un point quelconque en amont du cuvier de tête.

FIG.1

FIG.2

FIG.3

FIG.4